# EUROPÄISCHE PATENTANMELDUNG

(11) **EP 4 464 640 A1**
(43) Veröffentlichungstag der Anmeldung: **20.11.2024**
(21) Anmeldenummer: 24176793.8
(22) Anmeldetag: 17.05.2024
(51) Int. Cl.: B66C 1/66, E04B 1/41, F16B 45/00, B66B 11/00

(54) **LASTAUFNAHMEVORRICHTUNG, INSBESONDERE FÜR DEN AUFZUGSBAU**

(30) Priorität: 19.05.2023 CH 5372023
(71) Anmelder: PohlCon AG (Schweiz), 8193 Eglisau (CH)
(72) Erfinder: Portmann, Stefan, 8332 Russikon (CH)
(74) Vertreter: Rentsch Partner AG

(57) **Zusammenfassung**

Die Erfindung betrifft eine Lastaufnahmevorrichtung (1) umfassend ein Lastaufnahmeelement (3), welches ein ferromagnetisches Element umfasst oder zumindest bereichsweise aus einem ferromagnetischen Material besteht und eine Aufnahmemulde (2) zur Aufnahme des Lastaufnahmeelementes (3), wobei das Lastaufnahmeelement (3) in der Aufnahmemulde (2) um eine Schwenkachse (4) zwischen einer Ausschwenkstellung und einer Einschwenkstellung verschwenkbar ist, wobei das Lastaufnahmeelement (3) in der Einschwenkstellung in die Aufnahmemulde (2) eingeschwenkt ist, und wobei das Lastaufnahmeelement (3) in der Ausschwenkstellung aus der Aufnahmemulde (2) ausgeschwenkt und für das Anhängen einer Last positioniert ist. Sie ist dadurch gekennzeichnet, dass ein Federelement (5) eingerichtet ist, welches das Lastaufnahmeelement (3) in Richtung der Ausschwenkstellung federbelastet, und dass in der Aufnahmemulde (2) ein Magnetelement (6) befestigt ist, welcher das Lastaufnahmeelement (3) in der Einschwenkstellung gegen die Federkraft des Federelements (5) festhält.

## Beschreibung

### GEBIET DER ERFINDUNG

Die Erfindung betrifft eine Lastaufnahmevorrichtung, mit einer Aufnahmemulde zur Aufnahme eines Lastaufnahmeelementes, und mit einem in der Aufnahmemulde befestigten ferromagnetischen Lastaufnahmeelement, wobei das Lastaufnahmeelement in der Aufnahmemulde um eine Schwenkachse zwischen einer Ausschwenkstellung und einer Einschwenkstellung verschwenkbar ist, wobei das Lastaufnahmeelement in der Einschwenkstellung in die Aufnahmemulde eingeschwenkt ist, und wobei das Lastaufnahmeelement in der Ausschwenkstellung aus der Aufnahmemulde ausgeschwenkt und für das Anhängen einer Last positioniert ist, sowie einer Verwendung einer solchen Lastaufnahmevorrichtung.

### HINTERGRUND DER ERFINDUNG

Lastaufnahmevorrichtungen des eingangs genannten Aufbaus dienen insbesondere dazu, eine schwere Last daran (wieder lösbar) aufzuhängen. Die Lastaufnahmevorrichtung ist dazu einbetoniert, typischerweise in einen Deckenteil eines Betonbauwerkes, wie beispielsweise einen Aufzugsschacht. Eine Last wird als schwer bezeichnet, wenn sie mehr als 0,5 oder 1 Tonne wiegt. Beispielsweise in einem Aufzugsschacht wird typischerweise eine mobile Arbeitsplattform an der Lastaufnahmevorrichtung aufgehängt.

Das Lastaufnahmeelement wird hierzu aus der Aufnahmemulde ausgeschwenkt und die Last daran befestigt bzw. eingehängt. In Ruhestellung, also wenn keine Last einzuhängen ist, befindet sich das Lastaufnahmeelement in der Aufnahmemulde und ist typischerweise hierin vollständig eingetaucht.

Soll eine Last in das Lastaufnahmeelement eingehängt werden, so muss das Lastaufnahmeelement in die Ausschwenkstellung verschwenkt und in dieser Ausschwenkstellung auch gehalten werden, was umständlich sein kann, wenn das Lastaufnahmeelement mit dem Ende der Last nicht richtig "getroffen" wird.

Eine Lastaufnahmevorrichtung des eingangs genannten Aufbaus ist beispielsweise aus der Literaturstelle EP 3643854 A1 bekannt. Dabei ist eine vertikal wirkende Feder eingerichtet, welche ein Schiebeelement in vertikaler Richtung und nach unten federbelastet. An dem Schiebeelement ist eine Lastöse verschwenkbar aufgehängt. Ein Sperrelement hält die Lastöse in der Ausschwenkstellung, so dass die Last eingehängt werden und dabei nicht unbeabsichtigt in Richtung der Einschwenkstellung verschwenkt werden kann. Zum Verschwenken der Lastöse in die Einschwenkstellung muss das Sperrelement entriegelt und die Lastöse dann verschwenkt werden

Dies ist konstruktiv aufwändig und in der Bedienung umständlich.

### DARSTELLUNG DER ERFINDUNG

Der Erfindung liegt das technische Problem zu Grunde eine Lastaufnahmevorrichtung zu Verfügung zu stellen, welche konstruktiv einfach baut, einfach zu bedienen ist, und dennoch gewährleistet, dass das Lastaufnahmeelement sowohl in der Einschwenkstellung als auch in der Ausschwenkstellung jeweils kraftschlüssig gehalten wird.

Die erfindungsgemässe Lastaufnahmevorrichtung umfasst ein Lastaufnahmeelement, welches ein ferromagnetisches Element umfasst oder zumindest bereichsweise aus einem ferromagnetischen Material besteht und eine Aufnahmemulde zur Aufnahme des Lastaufnahmeelementes. Das Lastaufnahmeelement ist in der Aufnahmemulde um eine Schwenkachse zwischen einer Ausschwenkstellung und einer Einschwenkstellung verschwenkbar angeordnet. In der Einschwenkstellung ist das Lastaufnahmeelement in die Aufnahmemulde eingeschwenkt. In der Ausschwenkstellung ist das Lastaufnahmeelement aus der Aufnahmemulde ausgeschwenkt und für das Anhängen einer Last positioniert.

Zu Lösung dieses technischen Problems lehrt die Erfindung, dass ein Federelement eingerichtet ist, welches das Lastaufnahmeelement in Richtung der Ausschwenkstellung federbelastet, und dass in der Aufnahmemulde ein Magnetelement befestigt ist, welcher das Lastaufnahmeelement in der Einschwenkstellung gegen die Federkraft des Federelements festhält.

Die Erfindung macht sich zu Nutze, dass eine Federkraft in allererster Näherung dem Hookeschen Gesetz folgt, als die Kraft linear mit der Auslenkung ab- oder zunimmt, während die Magnetkraft in allererster Näherung umgekehrt proportional dem Quadrat des Abstandes ist. Bei der Erfindung gibt es daher in einer bestimmten Position des Lastaufnahmeelementes, welche zwischen der Ausschwenkstellung und der Einschwenkstellung liegt, ein metastabiles Gleichgewicht zwischen der magnetischen Anziehung zwischen Magnetelement und Lastaufnahmeelement einerseits, und der Federkraft des Federelementes andererseits. Metastabil bedeutet hier, dass eine minimale Auslenkung aus dem Gleichgewichtszustand dazu führt, dass das Lastaufnahmeelement entweder in die Einschwenkstellung oder in die Ausschwenkstellung schnappt, je nachdem in welcher Richtung die Auslenkung stattfindet. In Ergebnis wird das Lastaufnahmeelement sowohl in der Einschwenkstellung als auch in der Ausschwenkstellung kraftschlüssig gehalten und kann mit Krafteinsatz zwischen diesen Stellungen verschwenkt werden. Dies macht die Bedienung besonders einfach und zeichnet sich zudem durch konstruktive Einfachheit aus.

In einer besonderen Weiterbildung der Erfindung ist ein Auslöseelement zum Lösen des Lastaufnahmeelementes von dem Magnetelement eingerichtet. Bei Betätigung des Auslöseelementes wird das Lastaufnahmeelement aus der Einschwenkstellung und über besagtes metastabiles Gleichgewicht hinaus gedrückt, so dass das Lastaufnahmeelement selbsttätig in die Ausschwenkstellung schwenkt.

Zum Lösen des Lastaufnahmeelementes von dem Magnetelement kann die Lastaufnahmevorrichtung ein Auslöseelement umfassen. Das Auslöseelement kann als Hebelelementp271616 ausgeführt sein, wobei durch Schwenken eines ersten Endes das zweite Ende entgegengesetzt schwenkbar ist und mittels des zweiten Endes das Lastaufnahmeelement von dem Magnetelement lösbar ist.

Dieses Auslöseelement kann im Einzelnen wie folgt ausgebildet sein. Bei einer Ausführungsform des Hebelelementes handelt es sich um ein Blech, dessen zweites Ende im Wesentlichen W-förmig ausgebildet ist, wobei der Mittelteil des "W" am Magnetelement befestigt ist. Die beiden Aussenschenkel des "W" untergreifen das Lastaufnahmeelement seitlich neben dem Magnetelement. Gegenüberliegend des zweiten Endes ist das erste Ende in Form eines nach aussen abgewinkelten Betätigungselements angebracht. Wird das Betätigungselement gedrückt, so werden die Aussenschenkel des zweiten Endes angehoben und hebeln das Lastaufnahmeelement von dem Magnetelement ab, und zwar so weit, bis das Lastaufnahmeelement die Position des metastabilen Gleichgewichts überschreitet. Im Ergebnis schwenkt das Lastaufnahmeelement unter der Federkraft des Federelements in die Ausschwenkstellung. Umgekehrt, beim Verschwenken des Lastaufnahmeelementes in die Einschwenkstellung wird dieses gegen die Aussenschenkel des weiten Endes soweit eingedrückt, bis die Position des metastabilen Gleichgewichts des Lastaufnahmeelementes in Richtung des Magnetelementes überschritten ist, so dass das Lastaufnahmeelement von Magnetelement gehalten wird.

Für das Lastaufnahmeelement kommen insbesondere neben Eisen auch ferromagnetische Stähle in Frage. Alternativ kann das Lastaufnahmeelement ein ferromagnetisches Element umfassen, beispielsweise in Form eines ferromagnetischen Einsatzes, der in ein Lastaufnahmeelement aus faserverstärktem Kunststoff hergestellt ist.

Die Magnetkraft des Magnetelements i.V.m den ferromagnetischen Eigenschaften sowie dem Abstand der Position des Magnetelementes und dessen Gewicht ist gegenüber der Federkraft des Federelementes so bemessen, dass das Lastaufnahmeelement zuverlässig in der Einschwenkstellung gehalten wird. Die Federkraft des Federelementes ist so zu bemessen, dass ein unproblematisches einhängen einer Last möglich ist.

In Folgenden werden nicht limitierende bevorzugte Ausführungsformen näher erläutert.

Bevorzugter Weise handelt es sich bei dem Lastaufnahmeelement um eine Lastöse. Die Lastaufnahmevorrichtung ist typsicherweise in eine Betondecke, insbesondere eines Aufzugsschachtes, einbetonierbar. Grundsätzlich ist die erfindungsgemässe aber mit beliebiger Orientierung einsetzbar. Die Aufnahmemulde ist hierbei vorzugsweise dazu konfiguriert das Lastaufnahmeelement und/oder das Federelement und/oder das Auslöseelement von Beton abzuschirmen.

Es ist bevorzugt, wenn das Lastaufnahmeelement in der Einschwenkstellung bündig in der Aufnahmemulde liegt. Auch ist es unabhängig davon bevorzugt, wenn die Aufnahmemulde bündig einbetonierbar ist, so dass das Gesamtkonstrukt in der Einschwenkstellung des Lastaufnahmeelementes bündig mit einer Betonwandung bzw. -Decke abschliesst.

Es ist zweckmässig, wenn die Einschwenkstellung und die Ausschwenkstellung etwa in einem Winkel von 90° zueinander stehen. Es ist aber auch möglich, dass die Einschwenkstellung einen geringeren Winkel zur Ausschwenkstellung aufweist. Die Schwenkachse des Lastaufnahmeelements ist im einbetonierten Zustand vorzugsweise im Wesentlichen horizontal angeordnet.

Im Einzelnen ist es bevorzugt, wenn das Federelement als zu der Schwenkachse des Lastaufnahmeelementes koaxiale Schenkelfeder ausgebildet ist, wobei ein erster Federschenkel sich ausserhalb der Schwenkachse in der Aufnahmemulde abstützt, und wobei ein zweiter Federschenkel sich ausserhalb der Schwenkachse gegen das Lastaufnahmeelement abstützt. Das Magnetelement ausserhalb der Schwenkachse des Lastaufnahmeelementes in der Aufnahmemulde befestigt, so dass es eine Magnetkraft auf das ferromagnetische Lastaufnahmeelement um seine Schwenkachse bewirken kann.

Es wird sich empfehlen, dass auf der Aussen- bzw. Rückseite der Aufnahmemulde Ankerelemente zum zugfesten Einbetonieren eingerichtet sind. Die Lastaufnahmevorrichtung kann mindestens ein Ankerelement zum zugfesten Einbetonieren der Lastaufnahmevorrichtung umfassen, welches mit dem Lastaufnahmeelement wirkverbunden ist und aussenseitig der Aufnahmemulde angeordnet ist.

Die Aufnahmemulde der Lastaufnahmevorrichtung kann hierbei Teil eines Gehäuses sein, welches eine Auflagefläche zur Auflage auf einem Schalungselement aufweist. Das Gehäuse ist im Bereich der Auflagefläche bevorzugt zwischen 100 mm und 250 mm lang, besonders bevorzugt zwischen 125 mm und 200 mm lang. Es weist hierbei vorzugsweise eine Breite von 75 mm und 200 mm auf, besonders bevorzugt zwischen 100 mm und 150 mm. In einer spezifischen Ausführungsvariante kann das Gehäuse 160 mm lang sein und 120 mm breit sein. Die Höhe der Lastaufnahmevorrichtung kann zwischen der Auflagefläche und dem distalen Ende des Ankerelements zwischen 100 mm und 250 mm betragen, vorzugsweise zwischen 125 mm und 225 mm, in bevorzugten Ausführungsvarianten 129 mm und 198 mm. Die Auflagefläche kann hierbei von einem Aufnahmeraum überspannt werden, welcher die Aufnahmemulde bildet.

Die Erfindung betrifft des Weiteren die Verwendung einer erfindungsgemässen Lastaufnahmevorrichtung zur Aufhängung einer Last, insbesondere an der Decke eines Aufzugsschachts.

### LISTE DER FIGUREN

Anhand der in den nachfolgenden Figuren gezeigten Ausführungsbeispiele und der dazugehörigen Beschreibung werden Aspekte der Erfindung näher erläutert.

Es zeigen:
- Fig. 1: eine perspektivische Ansicht einer ersten Ausführungsvariante der erfindungsgemässen Lastaufnahmevorrichtung in der Einschwenkstellung,
- Fig. 2: eine perspektivische Ansicht der erfindungsgemässe Ausführungsvariante der Lastaufnahmevorrichtung nach Figur 1 in der Ausschwenkstellung,
- Fig. 3: die erfindungsgemässe Ausführungsvariante der Lastaufnahmevorrichtung nach Figur 1 in einer Draufsicht mit Lastaufnahmeelement in der Einschwenkstellung;
- Fig. 4: die erfindungsgemässe Ausführungsvariante der Lastaufnahmevorrichtung nach Figur 1 in einer Draufsicht mit Lastaufnahmeelement in der Ausschwenkstellung;
- Fig. 5: die erfindungsgemässe Ausführungsvariante der Lastaufnahmevorrichtung nach Figur 1 in einer geschnittenen Seitenansicht mit Lastaufnahmeelement in der Einschwenkstellung;
- Fig. 6: die erfindungsgemässe Ausführungsvariante der Lastaufnahmevorrichtung nach Figur 1 in einer geschnittenen Seitenansicht mit Lastaufnahmeelement in der Ausschwenkstellung.

### BESCHREIBUNG DER AUSFÜHRUNGSBEISPIELE

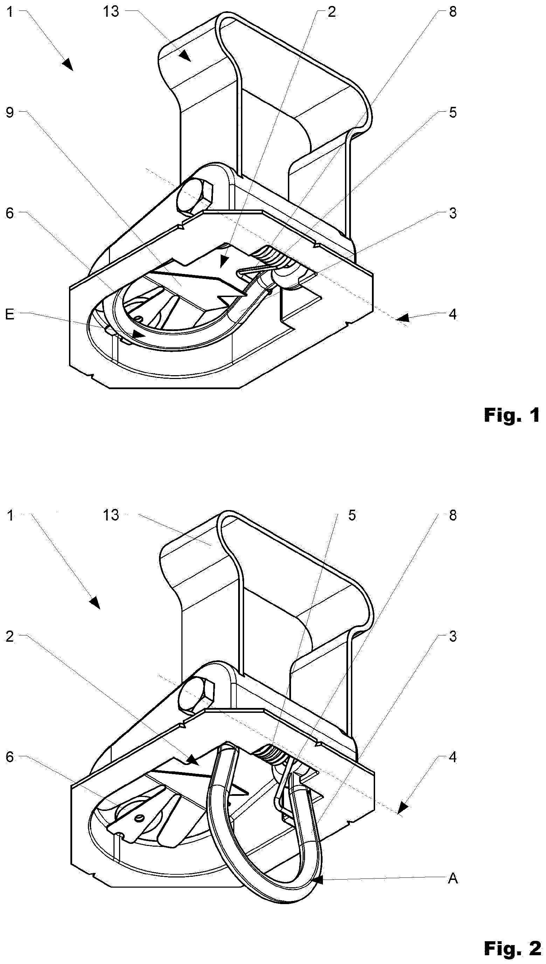

In den **Figuren 1** und **2** erkennt man eine Lastaufnahmevorrichtung 1, mit einer Aufnahmemulde 2 zur Aufnahme eines Lastaufnahmeelementes 3, und mit einem in der Aufnahmemulde 2 befestigten ferromagnetischen Lastaufnahmeelement 3.

**Figur 1** zeigt eine perspektivische Ansicht einer ersten Ausführungsvariante der Lastaufnahmevorrichtung 1 umfassend ein Lastaufnahmeelement 3, welches zumindest bereichsweise aus einem ferromagnetischen Material besteht und eine Aufnahmemulde 2 zur Aufnahme des Lastaufnahmeelementes 3, wobei das Lastaufnahmeelement 3 in der Aufnahmemulde 2 um eine Schwenkachse 4 zwischen einer Ausschwenkstellung A und einer Einschwenkstellung E verschwenkbar ist. Das gezeigte Lastaufnahmeelement 3 ist in der Einschwenkstellung E in die Aufnahmemulde 2 eingeschwenkt. In der Aufnahmemulde 2 ist ein Magnetelement 6 befestigt, welches das Lastaufnahmeelement 3 in der Einschwenkstellung E gegen die Federkraft des Federelements 5 festhält. Das gezeigte Lastaufnahmeelement 3 ist eine Lastöse.

Die Lastaufnahmevorrichtung 1 ist in eine Betondecke, insbesondere eines Aufzugsschachtes, einbetonierbar und die Aufnahmemulde 2 kann dazu konfiguriert sein das Lastaufnahmeelement 3, das Federelement 5 und das Auslöseelement 9 von Beton abzuschirmen. Die gezeigte Lastaufnahmevorrichtung 1 umfasst ein bügelförmiges Ankerelement 13 zum zugfesten Einbetonieren der Lastaufnahmevorrichtung 1, welches mit dem Lastaufnahmeelement 3 wirkverbunden ist und aussenseitig der Aufnahmemulde 4 angeordnet ist.

Einer vergleichenden Betrachtung der **Figuren 1** und **2** ist entnehmbar, dass das Lastaufnahmeelement 3 in der Aufnahmemulde 2 um eine Schwenkachse 4 zwischen einer Ausschwenkstellung und einer Einschwenkstellung verschwenkbar ist. In der gezeigten Ausschwenkstellung ist das Lastaufnahmeelement 3 aus der Aufnahmemulde 2 ausgeschwenkt und für das Anhängen einer Last positioniert. Das gezeigte Federelement 5 ist eingerichtet, das Lastaufnahmeelement 3 in Richtung der Ausschwenkstellung A auszuklappen, wobei die Einschwenkstellung E und die Ausschwenkstellung A etwa in einem Winkel von 90° zueinander stehen. Die Schwenkachse 4 des Lastaufnahmeelements 3 ist im einbetonierten Zustand vorzugsweise im Wesentlichen horizontal angeordnet.

Des Weiteren erkennt man in beiden Figuren, dass ein Federelement 5 eingerichtet ist, welches das Lastaufnahmeelement 3 in Richtung der Ausschwenkstellung federbelastet. In der Aufnahmemulde 2 ist ein Magnetelement 6 befestigt ist, welches das Lastaufnahmeelement 3 in der Einschwenkstellung gegen die Federkraft des Federelements 5 festhält. Im Einzelnen ist im Ausführungsbeispiel das Federelement 5 als zu der Schwenkachse 4 des Lastaufnahmeelementes 3 koaxiale Schenkelfeder 5 ausgebildet, wobei ein erster Federschenkel sich ausserhalb der Schwenkachse 4 in der Aufnahmemulde 4 abstützt, und wobei ein zweiter Federschenkel 8 sich ausserhalb der Schwenkachse 4 gegen das Lastaufnahmeelement 3 abstützt. Die Schenkelfeder 5 ist dabei in Richtung der Ausschwenkstellung des Lastaufnahmeelementes 3 vorgespannt.

Das Magnetelement 6 wiederum ist ausserhalb der Schwenkachse 4 des Lastaufnahmeelementes in der Aufnahmemulde 4 befestigt

Im Ausführungsbeispiel ist das Lastaufnahmeelement 3 eine Lastöse, welche um ca. 90 ° um die im Wesentlichen horizontal orientierte Schwenkachse 4 verschwenkbar ist.

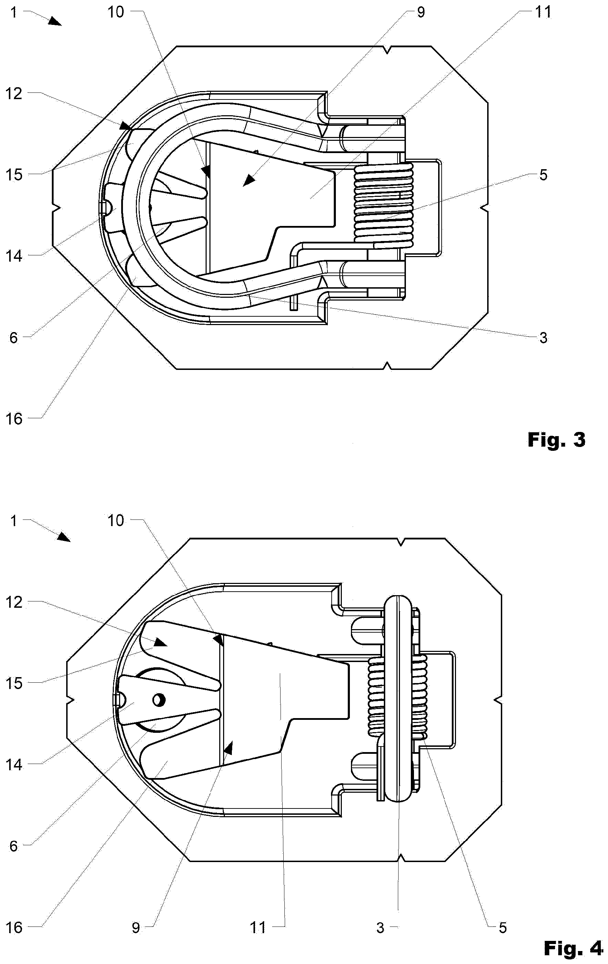

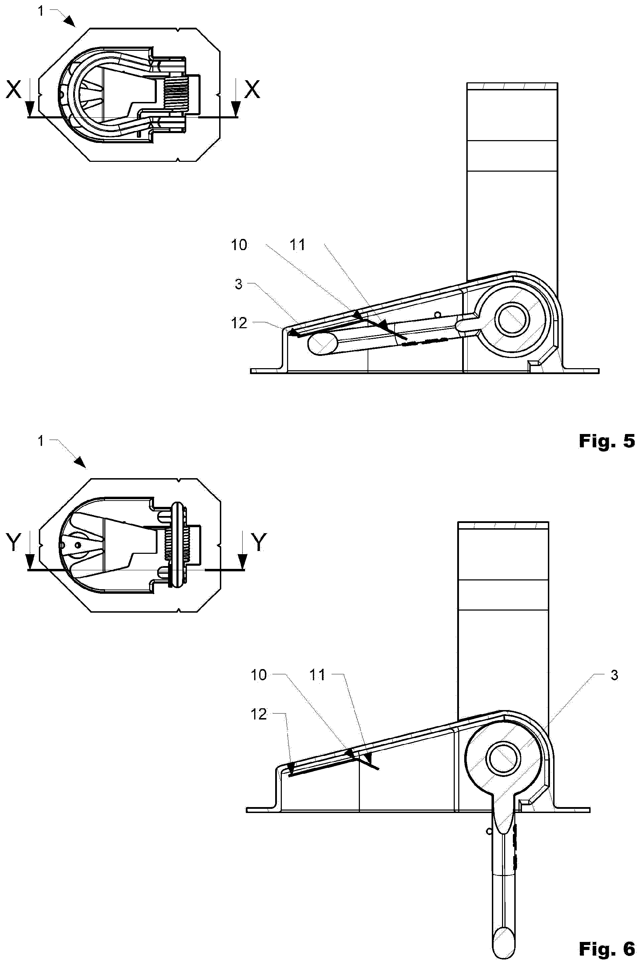

In den **Figuren 3** bis **6** zeigen vier Ansichten des Auslöseelementes 9 der Lastaufnahmevorrichtung 1 nach Figur 1. Das gezeigte Auslöseelement 9 ist als Hebelelement 10 ausgeführt, wobei durch Schwenken eines ersten Endes 11 das zweite Ende 12 entgegengesetzt schwenkbar ist und mittels des zweiten Endes 12 das Lastaufnahmeelement 3 von dem Magnetelement 6 lösbar ist. Bei dieser Ausführungsform handelt es sich bei dem Hebelelement 10 um ein Blech, welches im Kern W-förmig ausgebildet ist, wobei das zweite Ende 12 ein Mittelteil 14 umfasst, welches mit den beiden Aussenschenkel 15, 16 ein W-förmiges Element bildet. Das Mittelteil 14 ist am Magnetelement 6 befestigt und die Aussenschenkel 15, 16untergreifen das Lastaufnahmeelement 3 seitlich neben dem Magnetelement 6.

An dem Hebelelement 10 ist ein erstes Ende 11 angebracht. Wird das erste Ende 11 gedrückt, so werden die Aussenschenkel 15, 16 des "W" federnd angehoben und hebeln das Lastaufnahmeelement 3 von dem Magnetelement 6 ab, und zwar so weit, bis das Lastaufnahmeelement 3 die Position des metastabilen Gleichgewichts überschreitet. Im Ergebnis schwenkt das Lastaufnahmeelement 3 unter der Federkraft des Federelements 5 in die Ausschwenkstellung. Umgekehrt, beim Verschwenken des Lastaufnahmeelementes 3 in die Einschwenkstellung wird dieses gegen die Aussenschenkel 15, 16 des "W" soweit eingedrückt, bis die Position des metastabilen Gleichgewichts des Lastaufnahmeelementes 3 in Richtung des Magnetelementes 6 überschritten ist, so dass das Lastaufnahmeelement 3 von Magnetelement 6 gehalten wird.

### LISTE DER BEZUGSZEICHEN

- 1: Lastaufnahmevorrichtung
- 2: Aufnahmemulde
- 3: Lastaufnahmeelement
- 4: Schwenkachse
- 5: Federelement
- 6: Magnetelement
- 7: Erster Federschenkel
- 8: Zweiter Federschenkel
- 9: Auslöseelement
- 10: Hebelelement
- 11: Erstes Ende
- 12: Zweites Ende
- 13: Ankerelement
- 14: Mittelteil
- A: Ausschenkstellung
- E: Einschwenkstellung

## Patentansprüche

1. Lastaufnahmevorrichtung (1) umfassend ein Lastaufnahmeelement (3), welches ein ferromagnetisches Element umfasst oder zumindest bereichsweise aus einem ferromagnetischen Material besteht und eine Aufnahmemulde (2) zur Aufnahme des Lastaufnahmeelementes (3),
a. wobei das Lastaufnahmeelement (3) in der Aufnahmemulde (2) um eine Schwenkachse (4) zwischen einer Ausschwenkstellung (A) und einer Einschwenkstellung (E) verschwenkbar ist,
b. wobei das Lastaufnahmeelement (3) in der Einschwenkstellung (E) in die Aufnahmemulde (2) eingeschwenkt ist, und
c. wobei das Lastaufnahmeelement (3) in der Ausschwenkstellung (A) aus der Aufnahmemulde (2) ausgeschwenkt und für das Anhängen einer Last positioniert ist,
**dadurch gekennzeichnet, dass** ein Federelement (5) eingerichtet ist, welches das Lastaufnahmeelement (3) in Richtung der Ausschwenkstellung (A) federbelastet, und dass in der Aufnahmemulde (2) ein Magnetelement (6) befestigt ist, welches das Lastaufnahmeelement (3) in der Einschwenkstellung (E) gegen die Federkraft des Federelements (5) fest hält.

2. Lastaufnahmevorrichtung (1) nach Anspruch 1, **dadurch gekennzeichnet, dass** die Lastaufnahmevorrichtung (1) ein Auslöseelement (9) umfasst, welches zum Lösen des Lastaufnahmeelementes (3) von dem Magnetelement (6) eingerichtet ist.

3. Lastaufnahmevorrichtung (1) nach Anspruch 2, **dadurch gekennzeichnet, dass** das Auslöseelement (9) als Hebelelement (10) ausgeführt ist, wobei durch Schwenken eines ersten Endes (11) das zweite Ende (12) entgegengesetzt schwenkbar ist und mittels des zweiten Endes (12) das Lastaufnahmeelement (3) von dem Magnetelement (6) lösbar ist.

4. Lastaufnahmevorrichtung (1) nach einem der Ansprüche 1 bis 3, **dadurch gekennzeichnet, dass** das Lastaufnahmeelement (3) eine Lastöse ist.

5. Lastaufnahmevorrichtung (1) nach einem der Ansprüche 1 bis 4, **dadurch gekennzeichnet, dass** die Lastaufnahmevorrichtung (1) in eine Betondecke, insbesondere eines Aufzugsschachtes, einbetonierbar ist und die Aufnahmemulde (2) vorzugsweise dazu konfiguriert ist das Lastaufnahmeelement (3), das Federelement (5) und das Auslöseelement (9) von Beton abzuschirmen.

6. Lastaufnahmevorrichtung (1) nach einem der Ansprüche 1 bis 5, **dadurch gekennzeichnet, dass** die Einschwenkstellung (E) und die Ausschwenkstellung (A) etwa in einem Winkel von 90° zueinander stehen und die Schwenkachse (4) des Lastaufnahmeelements (3) im einbetonierten Zustand vorzugsweise im Wesentlichen horizontal angeordnet ist.

7. Lastaufnahmevorrichtung (1) nach einem der Ansprüche 1 bis 6, **dadurch gekennzeichnet, dass** das Federelement (5) als zu der Schwenkachse (4) des Lastaufnahmeelementes (3) koaxiale Schenkelfeder (5) ausgebildet ist, wobei ein erster Federschenkel (7) sich ausserhalb der Schwenkachse (4) in der Aufnahmemulde (4) abstützt, und wobei ein zweiter Federschenkel (8) sich ausserhalb der Schwenkachse (4) gegen das Lastaufnahmeelement (3) abstützt.

8. Lastaufnahmevorrichtung (1) nach einem der Ansprüche 1 bis 7, **dadurch gekennzeichnet, dass** das Magnetelement (6) ausserhalb der Schwenkachse (4) des Lastaufnahmeelementes in der Aufnahmemulde (4) befestigt ist.

9. Lastaufnahmevorrichtung (1) nach einem der Ansprüche 1 bis 8, **dadurch gekennzeichnet, dass** die Lastaufnahmevorrichtung (1) mindestens ein Ankerelement (13) zum zugfesten Einbetonieren der Lastaufnahmevorrichtung (1) umfasst, welches mit dem Lastaufnahmeelement (3) wirkverbunden ist und aussenseitig der Aufnahmemulde (4) angeordnet ist.

10. Verwendung einer Lastaufnahmevorrichtung (1) nach einem der Ansprüche 1 bis 9 zur Aufhängung einer Last, insbesondere an der Decke eines Aufzugsschachts.
